# EUROPEAN PATENT APPLICATION

(11) **EP 1 727 310 A1**
(43) Date of publication of application: **29.11.2006**
(21) Application number: 05104434.5
(22) Date of filing: 24.05.2005
(51) Int. Cl.: H04L 12/28, H04L 12/56

(54) **Method and apparatus for discovering a service in an AD-HOC network**

(71) Applicant: NTT DoCoMo, Inc., Tokyo (JP)
(72) Inventor: Krop, Tronje, 64347 Griesheim (DE); Prehofer, Christian, 81477 Muenchen (DE); Kappes, Martin, 82205 Gilching (DE); Hollick, Matthias, 64289 Darmstadt (DE)
(74) Representative: Betten & Resch

(57) **Abstract**

A method for enabling the discovery of one ore multiple service node in an ad-hoc network comprising a plurality of nodes one or more of which are service nodes which can offer a certain service to a requesting client, said method comprising:
generating a route request by client which is a node of said ad-hoc network and wants to discover a service node, said route request being generated such that its destination address is a predefined IP address which is a reserved address and therefore actually cannot be an address assigned to a node in the ad-hoc network;
disseminating the route request through the nodes of said ad-hoc network using a routing protocol of an ad-hoc network which treats the route request as a standard route request directed to said predefined IP address and tries to locate a node having said predefined IP address;
if said route request reaches a service node, interpreting said route request directed to said predefined IP address as being a request for discovering a service node; and
returning a reply from said service node to said requesting client to inform said requesting client about the discovery of said service node.

## Description

### FIELD OF THE INVENTION

The present invention relates to a method and an apparatus for discovering a service node in an ad-hoc network.

### BACKGROUND OF THE INVENTION

Discovering a service does not pose any problems in classical types of networks where there are one or more servers which serve the requests of clients and about which location information is available due to the structure and organisation of the network. Such classical networks are "server-centered" in the sense that there is a central organisation or entity which keeps track of the elements and nodes in the network, their location (and addresses) in the network and the services which they can provide.

Therefore, finding a service node in such types of networks is a simple task if location information for the client and all service nodes is available, and this information is stored e.g. in a server. Also locating a service node in "close proximity" to a client (which may be desirable depending on the requested service) is not a problem in such a case. If all service nodes register their location with a server, it could simply compute the closest service node with respect to the clients given location and forward its address to the client upon request.

Such an approach, however, is not realistic in case of so-called "ad-hoc networks". This type of networks is characterised by a relatively high fluctuation with respect to their member nodes and furthermore by a relatively "loose structure" without a central authority (or server) being aware and keeping track of all elements in the network and their respective locations and capabilities. Accordingly, it is not possible for a client in an ad-hoc network of the known type to be aware of all the nodes and their respective services offered by them at a certain point of time, and therefore the selection of a suitable service node is hampered by this lack of information.

One possible approach could be to establish a type of infrastructure in ad-hoc networks where all service nodes register with a certain server which then provides the necessary information to all nodes in the network. However, this approach has various drawbacks. Firstly, the necessary location information for all nodes is currently not widely available yet. Moreover, it would require significant changes to be made in existing ad-hoc networks not only with respect to the introduction of a dedicated server for registration of service nodes but also with respect to the existing protocols which would have to take into account and make use of the new infrastructure.

While in ad hoc networks there exist mechanisms to find a single known service node, e.g., for reactive routing protocols by route requests, it is more challenging to efficiently find unknown service nodes. Different methods have been suggested to discovery on or more unknown service nodes by special probing and advertising messages, e.g., for gateway discovery in ad-hoc extended access networks, or for file discovery in peer-to-peer content sharing provided in ad hoc networks. All proposed solutions require the additional implementation of discovery protocols on each node. Moreover, they are inefficient because they divide service discovery and route establishment for communication.

It would be more desirable to enable the discovery of a service node in an ad-hoc network in a manner which makes only few amendments to an existing ad-hoc network infrastructure necessary. Accordingly it is an object of the present invention to provide a method for discovering a service node in an ad-hoc network which avoids the need for beforehand establishing a central register for the service nodes and which makes use of an existing infrastructure and protocols.

### SUMMARY OF THE INVENTION

According to an embodiment of the invention there is provided a method for enabling the discovery of one or multiple service node in an ad-hoc network comprising a plurality of nodes one or more of which are service nodes which can offer a certain service to a requesting client, said method comprising:
generating a route request by client which is a node of said ad-hoc network and wants to discover a service node, said route request being generated such that its destination address is a predefined IP address which is a reserved address and therefore actually cannot be an address assigned to a node in the ad-hoc network;
disseminating the route request through the nodes of said ad-hoc network using a routing protocol of an ad-hoc network which treats the route request as a standard route request directed to said predefined IP address and tries to locate a node having said predefined IP address;
if said route request reaches a service node, interpreting said route request directed to said predefined IP address as being a request for discovering a service node; and
returning a reply from said service node to said requesting client to inform said requesting client about the discovery of said service node.

The proposed service discovery mechanism can be used in connection with existing ad-hoc network protocols such as standard AODV and DSR implementations or any reactive routing scheme. Compared to other approaches, the proposed approach enables discovering of all close service nodes in standard AODV and DSR environments as specified today with limited changes to client nodes and service nodes only. All other nodes in the network need neither be modified nor are affected by the discovery protocol. This is especially important for nodes not participating in the service and not under control of the service provider. In addition the mechanism enables a highly efficient establishment of communication between client node and service nodes. All other known service discovery mechanisms would require changes to most, if not all nodes in the ad hoc network, and require additional steps for communication establishment.

In other words, the proposed mechanism allows facilitating an efficient discovery mechanism with only small changes on client nodes and service nodes. Therefore, it could be used to enable a discovery mechanism in situations where control over the available infrastructure is limited as is the case for provider-mediated communications. Moreover, the modifications necessary to enable the proposed technique on client and service nodes can be implemented minimally invasive. In essence, what is needed is only simple signaling between the AODV or DSR implementation and the service process. It could also be implemented by a packet observing technique, rendering changes to any running implementations on the service node unnecessary.

According to one embodiment the reply returned from said service node identifies itself by its content as being sent from a node having said predetermined IP address. This makes it possible to very efficiently establish a connection (a route) between the requesting node and said service node because both nodes are aware of the address of the respective other node and also the routing path has been established in the intermediate nodes just by sending the request to the service node and the reply from the service node.

According to one embodiment the client node and the service node may, once the connection between the client address and the predefined non-existing IP address has been established, negotiate to use a different address than the predefined non-existing address as the address of said service node. This makes the predefined address available again for being used in further route requests because as long as it is in use as a target address of an ongoing connection it may not be used for further such requests. The different address here may be the actual IP address of the service node.

According to one embodiment the discovery method uses the setting of a "destination only" flag in the route request. This avoids the reply messages being generated by intermediate nodes. Moreover, in case of attacks on the system or faulty behavior of intermediate nodes this mechanism leads to a more robust operation of the system.

According to a further embodiment the discovery method is repeated by generating the route requests for different non-existing IP addresses from a pool of non-existing IP addresses. This also avoids the negative effects introduced by the generation of route reply messages by intermediate nodes and thereby enables a discovery of more than one, actually up to all service nodes. The IP addresses for the repeated generation of the RREQ messages may be randomly chosen from the pool of non-existing IP addresses which by convention are interpreted by service nodes as triggering the reply message.

According to one embodiment the generation of a route request for a different destination address from a pool of non-existing predefined IP addresses is triggered by a receipt of a route reply which was generated by an intermediate node due to its awareness of a route to a requested destination address. This makes it possible to circumvent intermediate nodes which cannot forward anymore route requests for a certain destination address because earlier already they have become an intermediate node in a route to this address. It thereby enables the discovery of all service nodes.

According to one embodiment said reply returned from said service node identifies itself by its content as being sent from a node having an address different from said predetermined IP address. This avoids that intermediate nodes return a reply even if they are a part in a route to a targeted service node, however, since the service node did not reply using the predefined non-existing address but rather its own real IP address the issuing of a route reply by the service node is not a "matching reply" (searched IP address and IP address of the replying service node do not match) and therefore the predefined IP address may still be used for searching further service nodes despite a route request-route reply pair has been issued. In case of a "matching reply" as in one of the embodiments above the protocol of an ad-hoc network would not allow using the predefined IP address for a certain time until routing information is deleted if a matching reply has been generated. Furthermore, intermediate nodes would send a reply if they receive a further route request for the predefined IP address one after a route to the node having this address has already been generated. Since the issuing of a reply using an originating address different from said predefined IP address does not block the issuing of further requests using this predefined non-existing address and also does not block the dissemination of such further requests within the network this enables a highly efficient discovery of not only one but multiple up to all service nodes within the network.

According to one embodiment the issuing of a reply having as originating address said predefined IP address is treated as an error or an attack on said network and may trigger the use of a different predefined non-existing IP address for searching said service node. This makes the system robust against attacks or faulty behavior.

According to one embodiment the method further comprises: sending a service indication message from the service node to the client node using the routing path which has been established by said route request and its corresponding reply. The service indication message provides the requesting client node with the further information about the available service. This takes into account that the reply actually contains not yet any information about the services which the replying port may offer, whether it is available at all, about its port number under which it is available, etcetera. In order further negotiate and establish a client service relationship between the requesting client node and the replying service node therefore the service indication message is helpful.

According to one embodiment the method further comprises: detecting the pollution of the route cache of intermediate nodes, and in response to such a detection, switching to a different predefined reserved IP address from a pool of non-existing IP addresses and generating a new route request using said different IP address. This takes into account that the route may have been "polluted" in the sense that the routing nodes for some reason do not behave correctly anymore. This may e.g. be caused by any ad hoc node issuing a route request with an incorrect (non-existing or predefined) originator address or by issuing a route reply with an incorrect destination address. According to one example, pollution may be caused by a service node to which previously a route has been established having been removed from the network, in this case the intermediate nodes still for some time have the corresponding entries in the routing table. Another case of "pollution" is if a node in the network issues a "matching reply", i.e. a reply the originating address of which is the predefined IP address. By changing the IP address used in the request the resulting difficulties can be overcome.

According to one embodiment the method further comprises: returning a reply to said route request to said requesting node, whereas said reply contains an indication which enables said requesting node to identify said reply as a reply to a service discovery request. While the reply in terms of protocol requirements may take the form of a "normal" reply (route reply RREP) it may contain some indication identifying it as being a reply which was issued in response to a service discovery request. This avoids the need to send the service indication message which is needed to inform the requesting node about the availability of the service.

According to one embodiment said indication is an element of the reply message assuming a certain predefined value different from its standard value thereby enabling said client node to recognize the reply as a non-standard reply to a route request but as a reply to a service request. This makes it possible in case of the AODV protocol that the client or the protocol agent running on it distinguishes the reply from a normal reply to a route request.

According to one embodiment said indication comprises a service discovery specific predefined IP address which is recognized by said client node to identify the reply as a reply issued in response to a service discovery request. This enables in case of the DSR protocol the client (or the protocol agent running thereon) to distinguish between a normal route reply and a reply in response to service discovery request. If a pool of predefined service discovery specific predefined IP addresses is used it is even possible to identify the service from which the reply was issued based on its corresponding IP address. It should be noted here that the service discovery specific IP addresses typically are not the actual real addresses of the service nodes but rather other addresses used for the sole purpose to enable identification or the reply message as service reply and further the identification of individual services. This correspondence is agreed beforehand by convention.

According to a further embodiment a service association message and a service indication message are sent once the route is established. This finalizes the establishment of the client server connection, moreover it can be used for establishing a security context such as an authentication, key exchange, or the like.

According to a further embodiment there is provided a client for use in an ad-hoc network comprising a plurality of nodes one or more of which are service nodes which can offer a certain service to said requesting client, said client comprising: a requesting module for generating a route request by said client which is a node of said ad-hoc network and wants to discover a service node, said route request being generated such that its destination address is a predefined IP address which is a reserved address and therefore actually cannot be an address assigned to a node in the ad-hoc network and for disseminating the route request through the nodes of said ad-hoc network using a routing protocol of an ad-hoc network which treats the route request as a standard route request directed to said predefined IP address and tries to locate the node having said predefined IP address; and a receiving module for receiving a reply returned from said service node to said requesting client to inform said requesting client about the discovery of said service node. Using such a client it is possible to discover service nodes with minimum amendments to existing ad-hoc network infrastructures.

According to one embodiment the disseminating module is a standard protocol agent which works according to the AODV or the DSR standard. The use of such a standard protocol agent makes it possible to use many nodes in the ad-hoc network without any further amendments because they may be used to forward the standard messages disseminated by the protocol agent.

According to one embodiment the route request is generated by a service node in order to discover and establish connection with other service nodes. This enables the service node to be aware of their counterparts and to establish connection between themselves. Moreover, such a connection between the service nodes may be used by the provider to effectively use the resources of the network and to provide a certain overlay over the basic network.

According to a further embodiment there is provided a service node for use in an ad-hoc network comprising a plurality of client nodes which may request a certain service from said service node, said service node comprising:
a receiving module for receiving a route request generated by one of said client nodes which is a node of said ad-hoc network and wants to discover a service node, said route request being generated such that its destination address is a predefined IP address which is a reserved address and therefore actually cannot be an address assigned to a node in the ad-hoc network, said request having been disseminated through the nodes of said ad-hoc network using a routing protocol of an ad-hoc network which treats the route request as a standard route request directed to said predefined IP address and
tries to locate the node having said predefined IP address; and
an interpreting module for interpreting said route request directed to said predefined IP address if it reaches said service node as being a request for discovering a service node; and
a replying module for generating a reply to be returned from said service node to said requesting client to inform said requesting client about the discovery of said service node.
With such a service node a service request which pretends to be a route request can be detected and a reply to establish a client server connection can be sent.

### BRIEF DESCRIPTION OF THE DRAWINGS

Fig. 1 illustrates a service discovery procedure in a 1-hop range.
Fig. 2 illustrates a service discovery procedure in a 3-hop range.
Fig. 3 illustrates the return of a route reply.
Figs. 4A to 4D illustrate a configuration of a client and a service node and the messages exchanged therebetween according to embodiments of the invention.
Fig. 4E illustrates the forwarding of a standard route request in response to a service request according to an embodiment of the invention.
Fig. 5 illustrates the forwarding of a standard route request as shown in Fig.4 in response to a service request according to an embodiment of the invention for a 3-hop range.
Fig. 6 illustrates the forwarding of a standard route reply in response to a service request according to an embodiment of the invention.
Fig. 7 illustrates the forwarding of a service indication message according to an embodiment of the invention
Fig. 8 illustrates the establishment of an overlay according to an embodiment of the invention
Fig. 9 illustrates the forwarding of a modified route reply containing a service reply indication according to an embodiment of the invention
Fig. 10 illustrates the forwarding of a service association message according to an embodiment of the invention.
Fig. 11 illustrates the forwarding of a service indication message according to a further embodiment of the invention

### DETAILED DESCRIPTION

In the following the present invention will be described in detail by means of exemplary embodiments in connection with the accompanying drawings.

The following embodiment is explained in connection an ad hoc network with some dedicated service nodes and many non-service nodes running a standard reactive ad hoc routing protocol which cannot be modified. According to an embodiment of the invention there is provided an approach to enable the efficient discovery of all available service nodes in "close proximity" over the Ad hoc On-demand Distance Vector Routing (AODV) or the Dynamic Source Routing (DSR). The mechanism can, however, also be easily be adapted for any reactive routing scheme used in ad hoc networks (such as DYMO which is a new reactive protocol but not yet fully defined) and has the advantage of concurrently establishing routes between the client and all discovered service nodes in a very efficient way. Ad-hoc network protocols such as AODV, DSR, and DYMO are known to the skilled person, their specifications are defined by the IETF MANET (Mobile ad-hoc network) working group , a description of the AODV, the DSR, and the DYMO protocols can e.g. be found under http://www.ietf.org/html.charters/manet-charter.html.

The mechanism can be used for two different purposes, namely by clients in an ad hoc network to find the most suitable service node in proximity that offers the requested service, but also by service nodes to discover all other available service in ad hoc networks, thus enabling the service nodes to form a common distributed system. Possible applications of the method are based on the peer-to-peer paradigm and include name lookup services, dependable routing services, store-and-forward services, group communication services, as well as distributed file sharing. The proposed mechanism is operational with minimal changes to the AODV implementation at the discovering node and the service nodes, no changes on "intermediate" nodes in the ad hoc network are needed. In turn, it can be employed in AODV and DSR-based ad hoc networks to allow the use of advanced communication paradigms in such environments.

The discovery mechanism can also be used to establish the provider overlay as well as to provide advanced services offered through provider nodes to the ad hoc network. Since the provider does not have control over all the available devices in the ad hoc network, it is according to one embodiment preferable that the discovery mechanism is interoperable with standard implementations as are available today without assuming additional functionality that might appear in the future. The embodiments described in more detail take into account this requirement.

AODV is currently the prevailing routing protocol for research in ad hoc networks. Therefore, the following description will focus on presenting an approach for discovering neighboring service nodes over AODV. As will be readily apparent to the skilled person, similar methods could also be applied for other underlying reactive routing protocols, e.g., DYMO. A somewhat more detailed explanation will be given how the approach according to an embodiment of the invention can be implemented in AODV or DSR.

AODV and DSR define three message types, namely Route Request (RREQ), Route Reply (RREP) and Route Error (RERR). In normal operation, a node A requesting a route to a node *B* sends a RREQ for *B* to the network. The request is flooded through the network until it reaches a node C with a current route to *B* or *B* itself. In both cases, a RREP is generated and sent to A using the reverse route previously established by the received RREQ. While in AODV this information is stored in the intermediate nodes, in DSR it is provided by a list of intermediate nodes included in the RREQ message. In order to avoid unnecessary flooding of the network, AODV and DSR propose that nodes requesting a route employ an expanding ring search technique. In other words, a node *A* requesting a route to a node *B* would first issue a RREQ with a low TTL which is thus only forwarded over a limited number of hops. If the request times out unanswered, another RREQ with an increased TTL is issued by *A*.

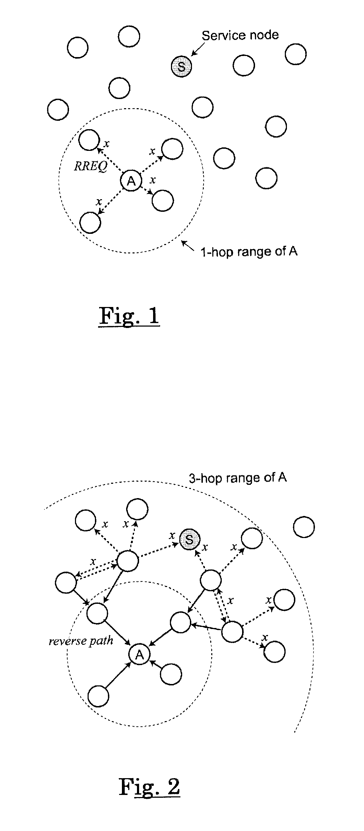

This is exemplarily illustrated by Fig. 1. One can see in Fig. 1 that the requesting client sends a Route Request (RREQ) to its neighboring nodes to look for the service node S. In a first attempt this request is only forwarded over one hop, thereby not reaching the service node S lying outside this range.

Fig. 2 illustrates the situation after the search ring has been expanded, in this case the number of hops has been increased to three. This means that the service node S now lies inside the covered range and is reached by the RREQ.

According to the present embodiment the service node discovery method makes use of the standard AODV and DSR mechanisms for RREQ / RREP in conjunction with a predefined set of service IP addresses that are not assigned to existing nodes in the ad hoc network, in the following called non-existing IP addresses. The non-existing IP addresses may be any addresses which - by definition - are not assigned to node members, they may be selected from any of the blocks of IP addresses which according to convention are reserved for other purposes such as the range 224.0.0.0 through 255.255.255.254 which is reserved for IP multicasting and experimental use (IP address classes D and E).

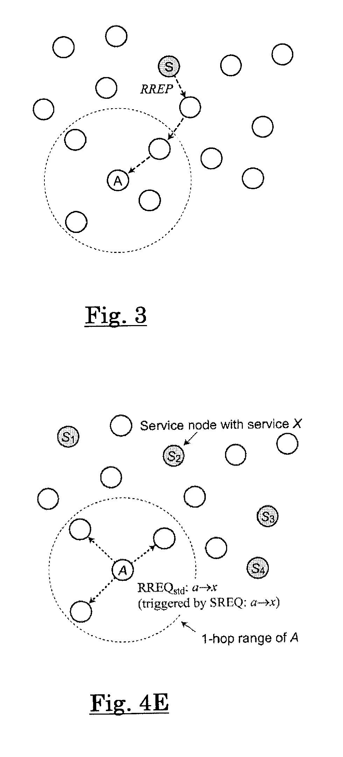

In the following one exemplary embodiment is described in somewhat more detail.
1. A process on node A looking for a service node in close proximity issues a UDP datagram (or a TCP packet) to one of the predefined non-existing IP addresses x assigned only for this purpose.
2. Triggered by the packet, *A*'s AODV implementation issues an AODV RREQ for the predefined non-existing IP address *x*.
3. The RREQ for IP address x is disseminated through the ad hoc network by AODV as usual and the reverse path to *A* is established. Steps 1. to 3. are schematically illustrated in Fig. 1. If they do not succeed in reaching a service node S the procedure is repeated with an expanded range as illustrated in Fig. 2 for a 3-hop range.
4. If a RREQ to x reaches a service node *S*, *S* records the request and issues a RREP indicating that S is assigned to the requested IP address x. This is schematically illustrated by Fig. 3. In this embodiment the AODV implementation at service node S contains some module which interprets the non-existing destination address x in the RREQ such that this RREQ in fact has to be interpreted as a service node discovery request rather than as a normal route request which should be forwarded to the address x which in fact is not assigned in the ad-hoc network. In response to this recognition a RREP is generated and returned to the originating client A. The RREP has as its originating address (e.g. in the corresponding field of the AODV message as defined by the AODV protocol) the address x, and therefore by returning this RREP to the requesting client node a connection between client node A and service node S which now has assigned to it the address x has been established.. Once the RREP has reached the client node the route from client node A to address x of the service node and back from address x to client node A has been established. In the standard AODV protocol implementation this means that the address x cannot be used for any further route requests, moreover, any route request directed to address x and reaching an intermediate node of an already existing route to address x may generate a RREP from the intermediate node and is not further disseminated through the network. Therefore such a RREQ cannot lead to the discovery of a service node as long as the target address still is in use, an thus it is preferable to reissue the RREP using a different target address chosen from the pool of predefined non-existing addresses.
5. *S*' AODV implementation after having received the RREQ forwards the information of the received RREQ from *A* to the entity on *S* (e.g., process) providing the service. This means that the AODV implementation at service node S contains some module which forwards the necessary information from the RREQ, in particular its originating address, to the module on S which actually provides the service. This entity on *S* in turn contacts *A* at the well defined port *p* for further negotiation. The port p is a port at client node A where A is ready to listen and receive messages in order to establish a communication with a service node once it has been discovered. The further negotiation between Service node S and client node A may include that both communication partners agree to change the address of the service node from X to its real IP address so that for providing the actual service the service node then uses its "real" address instead of the address x which was used as target address in the RREQ. This makes it possible that the address x - which then is not used for further communications between the service node and the client node - is released so that it can be used for further RREQs after some time. The standard AODV implementation for this purpose provides a timeout after which the entries in the routing tables in the intermediate nodes are deleted if no communication takes place for a certain time, and then the address x may again be used for further route requests.
6. A's AODV implementation might issue further RREQs for x, e.g., using an expanding ring search technique if no RREP is received for address x. This takes into account that the closest service node may still be too distant so that the RREQ did not travel far enough to reach it.
7. If the process requesting the service on *A* is not contacted by at least one service node *S* on port p, *A* starts the process from step 1 again using a different non-existing P address *y*.

It should be noted that the embodiment described with steps 1 to 7 above can operate without making any modification in the protocol implementation of the client side. This is possible by using a standard UDP datagram (or a TCP packet) for triggering the RREQ directed to the non-existing address x. The UDP datagram having the target address x is then handled by the AODV implementation on the client node in a normal manner as any other UDP datagram would be handled which is directed to an address for which no route exists yet, namely by issuing a route request in order to build up such a route. In case of an AODV standard implementation the routing agent which is responsible for requesting and maintaining routes does not care that actually the address x is not assigned in the network to a certain node, it just generates a standard route request for searching a route to the node having address x which is then disseminated through the network in a normal manner.

In the following embodiment there is described an embodiment in which some details of the above procedure are described. As outlined in step 2 and 6 above, a standard AODV implementation can be used in *A*. This also facilitates the need for the service node S to issue a RREP in step 4 to prevent A from creating unnecessary load by further RREQs. Once the RREP reaches A the route is established and A may send a UDP datagram (or a TCP packet) created in step 1 above to S. This then enables the negotiation and the provision of a service from S to A. It should be noted, however, that the mechanism to actually discover the service node S does not depend on the UDP datagram, however, it may contain additional information. Depending on the circumstances it may thus either be processed or discarded by S.

According to one embodiment there is provided a mechanism which deals with an aspect of AODV which also allows intermediate nodes that have a current route to a node N to answer RREQs for N. If a different node using the same mechanism to discover the service used address x for discovery in the same part of the network, it is possible that such an intermediate node Q answers a RREQ for x (as already described in connection with step 4 in the previous embodiment). In this case the process at *A* requesting the service will not reach S with its RREQ. Thus, A will not be contacted at port p since step 4 fails. In this case, according to one embodiment the UDP datagram issued in step 1 is used to initiate the negotiation of step 5 if node S listens on port p of the specified service IP address, because due to the existing route to x the UDP datagram may just be forwarded to x (the service node) and be processed there appropriately to carry out the negotiation of step 5.

One possibility to avoid answers from intermediate nodes according to one embodiment is to use AODV's destination only flag which when set indicates only the destination of the route request may respond. This means that even if a service node actually knows a route to the destination address because it is an intermediate node of an existing route it will not generate a route reply but rather proceed with forwarding the route request. Only the final destination node (service node S) will generate and respond with a route reply RREP.

According to a further embodiment another approach may be followed to circumvent the effect caused by RREP messages generated from intermediate nodes. For that purpose the discovery procedure is repeated with a different non-existing IP address *y*, randomly chosen from an address set of predefined non-existing addresses, making responses from intermediate nodes less and less likely with an increasing number of repetitions of the process for different non-existing addresses. Moreover, since an address x used for discovery is not used again after the discovery concludes (e.g. by switching to the "real" IP address of the service node for the further communication), the active route established by the RREQ/RREP for address x times out after a certain time (default is about 3 seconds according to the AODV standard), making address x reusable for the discovery procedure after this interval.

It should be noted that it is also possible to implement the above mechanism without any changes to the AODV implementation at the service nodes if the service nodes are configured to use multiple IP addresses, namely their original address plus all addresses in the pre-defined set of non-existing IP-addresses. If all service nodes S listen on a UDP port *p*, *A* can include its own IP address in the datagram in step 1 and send this packet to x at port p. After the RREP reaches A, this datagram is forwarded to one of the service nodes that in turn can contact the client. This method does not require any changes in the AODV implementation at the service nodes.

According to one embodiment the service node discovery mechanism is used by a node *A* to find multiple service nodes in its vicinity. This can also be achieved by the outlined procedure using multiple non-existing IP addresses. The mechanism may repeatedly generate RREQ messages for different predefined IP addresses from the pool of reserved non-existing IP addresses until all service nodes are discovered.

According to one embodiment the discovery mechanism is used by the service nodes themselves to establish an initial contact with other service nodes. In this case, by convention, a service node S will only answer a RREQ from a node A for a non-existing address *x* if *A* is unknown to S. This technique can also be used by the service nodes themselves to establish initial contact with other service nodes. After learning about other service nodes, protocols can be established to enable an information exchange between the service nodes.

In the embodiments described in the foregoing the service node which receives a RREQ directed to a predefined non-existing address x issues a RREP which has as its originating address the predefined address x, in other words the RREP is a matching reply because its originating address matches with the address to which the RREQ was directed. This has several advantages, especially with respect to the fact that a route between client node and a service node can be established very fast and efficiently. However, there are also some disadvantages, especially that the use of the predefined IP address not only to identify a RREQ but also as the actual address of the service node for further communication, at least as dispatch address for the RREP, "pollutes" the intermediate nodes in the sense that they do not forward any further RREQs for a predefined address for which a route already has been established for some time. This means that while the embodiments described before are particularly efficient in finding one or few service nodes, the efficiency decreases if many or even all service nodes in a network should be found because any existing route to a service node at least to some extent hampers the discovery of new service nodes since a predefined IP address in use for an existing route cannot be used to discover further service nodes.

In the following there are described some embodiments which use a somewhat different approach which is particularly efficient if multiple or even all service nodes of a network are to be found. This approach differs from the embodiments described before in that there is issued no "matching reply" by the service node in response to the route request. The approach will be described by means of exemplary embodiments in the following.

According to one embodiment the efficiency of the above-mentioned procedures can be improved. This is, e.g., the case if the AODV implementation in client nodes can be changed. In such a case, the AODV implementation at the client A knows that the outgoing RREQ for x is not a standard AODV request. This is necessary because in case of a standard AODV RREQ the client node would wait for a matching reply, and if no matching reply is issued the client again would reissue the route request. To avoid this behavior it is necessary to configure the client such that it knows that the RREQ is a non-standard RREQ for which it does not have to wait for a matching route reply having as x originating address. Therefore, a RREP by service nodes is unnecessary, and instead a service node may directly respond to a RREQ message by sending reply which comprises a UDP datagram (or a TCP packet) to the requesting node A the address of which is known to the service node as being the originating address of the RREQ message. Moreover, the route backward from the service node to the client node also has been established already by corresponding entries in the routing tables of the intermediate nodes because the RREQ has made its way to the service node. This packet or datagram may then be used for establishing the connection and the negotiation of the service between A and S.

Apart from saving the RREP, since no requests for address x are answered, the aforementioned problems with previous requests for x by other nodes do not occur as well. Thus, it is in principle only necessary to assign a single service IP address (the "predefined non-existing IP address" which is different from the "real" address of the service node) to service nodes, although multiple service IP addresses may also be used.. In the following a further embodiment will be described. This embodiment will describe in somewhat more detail how a connection between a service node and a requesting client is established. In this embodiment predefined non-existing IP addresses are used to identify a service request (SREQ), in case of AODV and in DSR also service reply (SREP), while routes are concurrently established on original node addresses. A subsequent service indication message (SIND) issued by the service node can be used to transport service specific parameters to the client node. Alternatively (or additionally) a service association (SASS) message issued by the client node can be used to request certain service specific parameters following provided by the service indication message (SIND), if the service reply is used to identify the service to the client.

The embodiment which will be described in somewhat more detail in the following provides a mechanism for detecting multiple or even all service nodes in close proximity over AODV (and in an alternative embodiment, over DSR). The aim of the procedure is for a client node A to find all IP addresses of nodes named *S*_{*n*} in close proximity offering a certain service *X*.

By a service *X* on node *S*_{*n*} is referred to a service process that is running on a node *S*_{*n*} with IP address *s*_{*n*} accepting incoming TCP connections or UDP datagrams on a certain service port *p*_{*X*}. Referring now to the term "client", a client *A* issuing a service request also listens on a predefined TCP or UDP service port *p*_{*X*}, where service nodes can contact the client node A and negotiate further service parameters. The terms *s*_{*n*}*:p*_{*X*} and *a:p*_{*X*} denote the endpoints of this communication on service and client nodes. When in the previous embodiments reference was made to a "service node" or a "client node" one could also imagine such an implementation of a service node and a client node as described before. For the method of the embodiment, all participating service and client nodes use a predefined set of non-existing service IP addresses to identify the service uniquely. Service IP address are used selectively and are denoted by the term x.

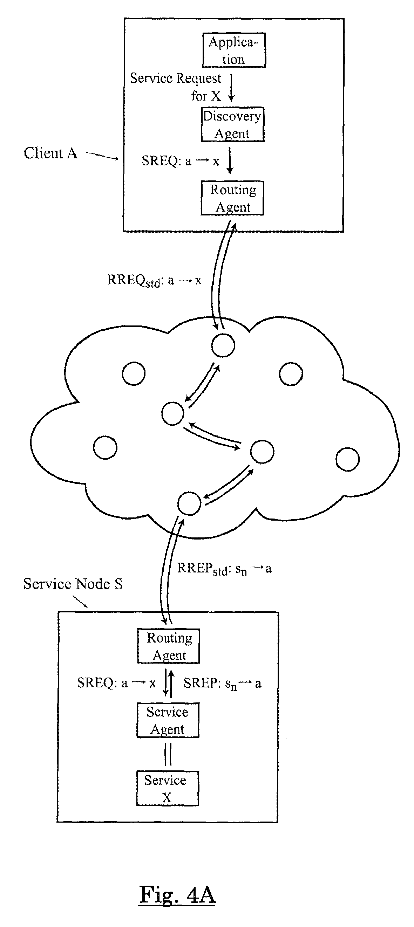

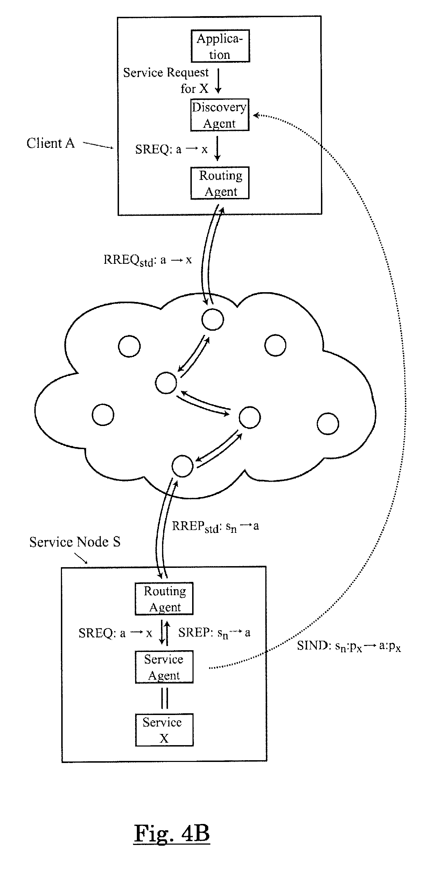

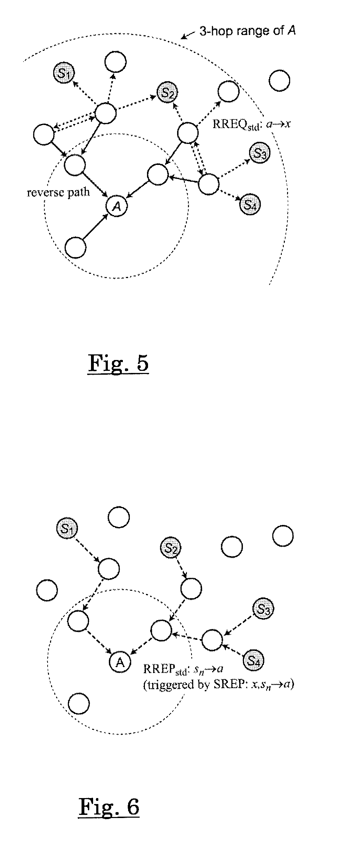

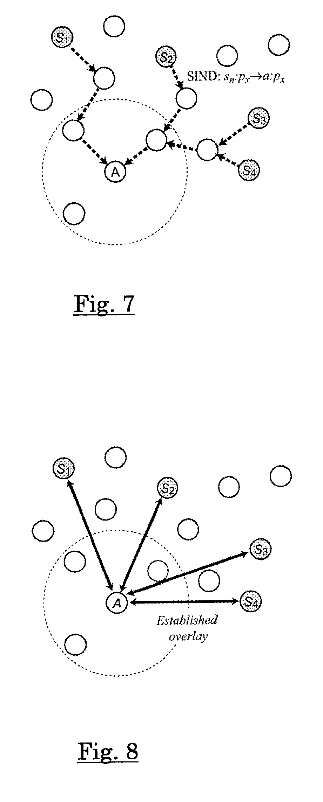

Subsequently, the details of the discovery mechanism according to the embodiment are outlined step by step for the base procedure. Some steps are illustrated by figures showing an example for a client node *A* looking for a service *X* running on service nodes *S*_{*1*} ... *S*_{*4*}. In the following embodiment it is assumed that the client node has a module (which may be implemented by means of a computer program) which acts as a discovery agent and is responsible for the discovery of a service. Such a service may. e.g. be requested by an application running on the client node, the application may be any application such as a file transfer application, a video or audio streaming application, a web access application or any other application which may desire to use the services offered by a service node which, however, at first must be discovered. On demand from such an application (which may take the form of a corresponding message dispatched from the application to the discovery agent) the discovery agent then initiates the discovery procedure as described below. It should further be mentioned that the client node also has a routing protocol agent (which also may be implemented by a computer program running on the client node) which is responsible for performing the operations necessary to establish and maintain a connection between two nodes using a certain protocol such as AODV or DSR. In the following now the steps of the discovery procedure according to the embodiment are described. The configuration of a client and a service node used in connection with the embodiment and the messages exchanged between client and service node as described in the following are schematically illustrated in Fig. 4A, whereas in Fig. 4A the routing protocol agent is referred to as routing agent.
1. As illustrated in Fig. 4A a discovery agent DA on client node *A* looking for a service *X* provided by services nodes in close proximity initiates the service discovery process by signaling a service request from node *A* to service *X* to the routing protocol agent PA on *A* identified by the corresponding IP addresses. This request is denoted by the term SREQ: *a → x*. "a" and "x" here respectively denote the originating address (of the client node) and the destination address which is one of a set of predefined non-existing addresses.
2. Triggered by the SREQ: *a* → *x* request of the discovery agent on *A*, the routing protocol agent on A issues a standard RREQ originated from IP address *a* to the service IP address x defined in the service request. This step is denoted by the term RREQ_{std}: *a* → *x*. For performing this step no modification of the standard protocol as usually performed by the protocol agent when issuing a route request (according to AODV or DS) is necessary. The target address, however, is the non-existing address x. Moreover, according to a preferred embodiment the routing agent is configured such that it does not expect a matching reply for the RREQ_{std}: *a → x* and therefore does not repeatedly generate RREQ_{std}: *a → x* if no such matching reply arrives at the routing agent. This step is schematically illustrated by Fig. 4A and further also by Fig. 4E.
3. The RREQ_{std}: *a* → *x* for IP address *x* is disseminated (flooding) through the ad hoc network by the routing protocol (AODV or DSR) as usual and the reverse route to client node A is established. In AODV the reverse route is established hop-by-hop represented by the state of intermediate nodes, while in DSR the reverse route is collected in the RREQ message to be processed by the destination nodes. Fig. 5 schematically illustrates this procedure in case of a 3-hop range.
4. If a RREQ_{std}: *a* → x with destination IP address x listed in the service IP address set reaches a service node *S*_{*n*}, the routing protocol agent on *S*_{*n*} records the request as usual by making corresponding entries in the routing table, possibly also by forwarding the route request RREQ_{std}: *a* → *x* to a neighboring node as it would forward any other route request not directed to the node itself according to the usual dissemination strategy for route requests. Furthermore, the routing agent indicates a SREQ: *a → x* to the service agent *X* on *S*_{*n*} to enable further negotiation. This indication differs from the "normal" standard routing agent performing e.g. a standard AODV protocol. For that purpose the routing agent contains in its settings a set of (predefined non-existing) valid listening service IP addresses assigned to service *X*. If a request directed to such an IP address is received the routing agent recognizes that it has to indicate a message a SREQ: *a → x* to the service agent. Instead of modifying the routing agent compared to a standard routing agent in the manner as just described the same effect can also be achieved without modifying the routing agent, e. g. according to one embodiment by using a packet sniffer. Such a packet sniffer may be inserted between the routing agent and its interface to the ad-hoc network, it is configured to examines all incoming packets and if it recognizes a RREQ directed to x based on its target address it signals to the service agent a corresponding message a SREQ: *a* → *x*. The necessary information (originating address *a* and the fact that the route request actually is a service request to *x*) both may be obtained from the information contained in the RREQ_{std}: *a* → *x*. This avoids the need to modify the routing agent in the manner described before. It should be noted that Fig. 4A only illustrates the version where the protocol agent interprets the incoming RREQ message, recognizes it as being a disguised services request and forwards a corresponding message SREQ: *a* → *x* to the service agent X, the embodiment using a packet sniffer is not illustrated in Fig. 4A.
5. If the service agent *X* on *S*_{*n*} is able to process further service requests, it signals a service reply for service *X* from service node *S*_{*n*} to client node *A* to the routing protocol agent on *S*_{*n*} in return to the SREQ: *a* → *x*. Again nodes and services are identified by the corresponding IP addresses. This request is denoted by the term SREP: x, *s*_{*n*} → *a* and the request is forwarded from the service X (which is a process running on service node *S*_{*n*}) to the routing protocol agent. This is also schematically illustrated in Fig. 4A.
6. Triggered by the SREP: *x, s*_{*n*} → *a* request of the service agent *X* on *S*_{*n*}, the routing protocol agent on *S*_{*n*} issues a standard RREP originated from IP address *s*_{*n*} to IP address *a* defined in the service request. This step is denoted by the term RREP_{std}: *s*_{*n*} → *a*. The originating address of the RREP_{std}: *s*_{*n*} → *a* message (as indicated e.g. in the corresponding field of a AODV message) is the "real" IP address of the service node *s*_{*n*}. The RREP_{std}: *s*_{*n*} → *a* message will find its way back to the address a of the client node since the AODV protocol does not require that a reply is a "matching reply" in order to establish a route. It should be noted that this step is carried out concurrently on all reached service nodes which received a service request. Therefore it is possible by this mechanism to find a plurality of service nodes very quickly and efficiently since the reply messages do not interfere with the further dissemination of the route request because the target address of the route request and the originating address of the reply are different.
7. The RREP_{std}: *s*_{*n*} → *a* to IP address *a* is sent (forwarded) through the ad hoc network by the routing protocol as usual and thereby the forward route from client node A to service node *S*_{*n*} is established. In AODV the forward route is established hop-by-hop represented by the state of intermediate nodes (which maintain a table in which the routing information is stored and if necessary updated), while in DSR the forward route is provided by the information gathered in the RREQ for the reverse route. This is schematically illustrated in Fig. 6 and also in Fig. 4A. As mentioned already, the standard RREPs are issued by all service nodes S which received a service request.
8. If the RREP_{std}: *s*_{*n*} → *a* is received by the routing protocol agent on client node *A*, it is treated as usual by establishing a route to the address *s*_{*n*} from which the RREP_{std}: *s*_{*n*} → *a* originated, and discarded after processing. In the standard RREP of current reactive routing protocols there is no way for the client node to discover that the RREP was issued by a service node in response to a service request. However, once the standard reply was received the routing path between A and S is established. With this now established route a direct communication between A and S is enabled, and therefore any information which still is necessary for providing the service may be transmitted over the now established route between client and service nodes.
9. To complete the service discovery, the service agent *X* on node *S*_{*n*} issues a service indication message to the discovery agent for service *X* on client node *A* using the related service ports *s*_{*n*}*:p*_{*x*} and *a:p*_{*x*}. The service indication message is send over the previously established reverse route by the routing protocol as usual. The message may be sent using TCP/IP or e.g. UDP in a standard manner based on the connection now established between the two nodes S and A which respectively are aware now of the address of its counterpart. This step of sending a service indication message is denoted by the term SIND: *s*_{*n*}*:p*_{*x*} *→ a:p*_{*x*}., it is schematically illustrated in Fig. 7 and also in Fig. 4B. Thereby the service node provides the client node with all necessary information to request the service from the service node and to make the service operate.
10. When the discovery agent *X* on client node *A* receives the SIND: *s*_{*n*}*:p*_{*x*} *→ a:p*_{*x*}, it stores the delivered information of the service indication message in its service nodes table. The discovery agent *X* may contact the service agent *X* on node *S*_{*n*} for further negotiation of service delivery, e.g., overlay establishment. For that purpose now the discovery agent not only knows the address of S but also the port number on which the service X is listening (due to the service indication message), and therefore the service negotiation may be carried out. This is schematically illustrated in Fig. 8. It should be noted that the service indication message does not rely on proper reception of the RREP_{std}: *s*_{*n*} → *a*, because the reverse route has been already established by the RREQ_{std}: *a → x*. Moreover, the forward route can now be established by the information provided in the service indication message by an additional RREQ_{std}: *a* → *s*_{*n*}. The purpose of the RREP_{std}: *s*_{*n*} → *a* is to prevent the routing agent form issuing this additional route request for efficiency.
11. The discovery agent *X* on client A might issue a new SREQ for *X* by restarting with step 1, if not enough service nodes are known or no service indication messages have been received on reply to the previous SREQ. Adaptive methods like expanding ring search might be applied to optimize discovery behavior. The procedure may be repeated until a certain interrupt criterion is reached, e.g. until a certain number of service nodes has been discovered or until the expanding ring as reached a certain hop threshold.

It should be noted that the above mechanism provides a client node with information about all available service nodes in near proximity as well as the necessary routing information at once, at least on a statistical basis, as long as the propagation of RREQ, RREP, and SIND must be considered unreliable. A repetition of the method can improve the reliability of service information to some degree. A regular repetition might also be necessary to react on topological changes and mobility of nodes.

In the following there will be described an embodiment similar to the above procedure in somewhat more detail. This embodiment is dealing with an aspect of AODV as well as DSR which is their ability of intermediate nodes that have a current route to the RREQs destination to directly answer with an RREP instead of further flooding the RREQ. If a single node in the ad hoc network issues a RREP in response to a RREQ on a service IP address x, the route cache of intermediate nodes will be polluted and service nodes cannot be reached by RREQ for service discovery any longer (step 4. will never be reached). Once a client node receives a route reply issued for destination address x the client interprets this as "pollution" and switches to a different predefined address when issuing further route requests. This maintains the efficiency of the service node discovery mechanism even in case of a pollution which may be caused by any faulty behavior or e.g. by a hostile attack. Since according to the described mechanism the system does not generate replies originating from address x any reply from such an address may be regarded as faulty behavior or as an attack and may trigger the switching to a different target address from a pool of predefined non-existing addresses for issuing further service requests.

One possibility to avoid answers from intermediate nodes is to use a destination only flag, as available in AODV, which indicates that only the destination of the route request may respond. The treatment of this flag by the intermediate nodes, however, may be different depending on the actual AODV implementation in the respective nodes. Some nodes may respect this flag, some may not.

Since one can not necessarily assume routing reactive protocols to support such a flag, according to one embodiment there is a different (or additional) approach for keeping route caches clean. This approach uses a set of service IP addresses for identification. If the discovery agent realizes a pollution of the route cache of intermediate nodes, it can switch the SREQ randomly to another service IP address and mark the faulty on as polluted. Since routing caches in reactive routing protocols will be cleaned up after a route timeout, the service IP can be reused after a certain time. In addition, a destination only flag can be used to make the procedure more robust against such errors.

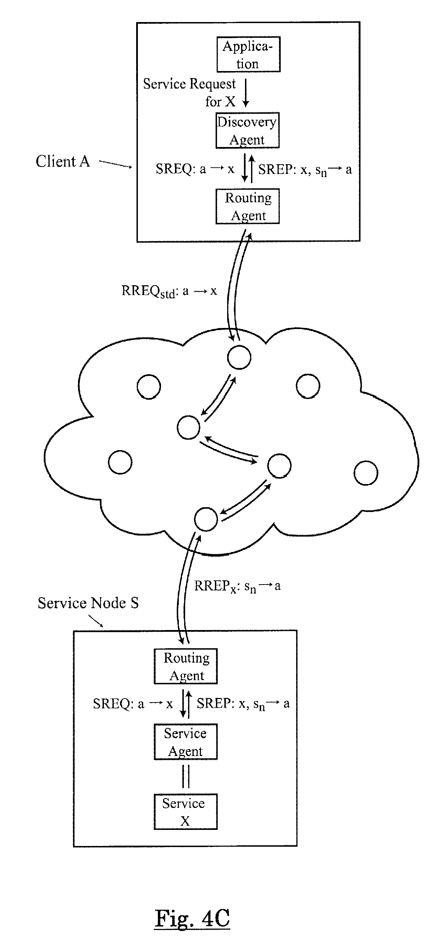

In the following there will be described a further embodiment which is a variation of the previous embodiment. In the above method described before the service nodes are urged to advertise their service abilities in step 10 by a SIND message to inform clients about their existence. This might be considered harmful in some situations, where the service requires a costly security context, and can be avoided in step 6 by a service association procedure as follows.
6. Triggered by the SREP: *x, s*_{*n*} → *a* request of the service agent *X* on *S*_{*n*}, the routing protocol agent on *S*_{*n*} issues a non-standard but protocol conform RREP originated from IP address *s*_{*n*} to IP address *a* defined in the service request, which identifies the RREP as response to a RREO_{std}: *a* → *x* which was triggered by a SREQ: *a → x*. This step is denoted by the term RREPₓ: *s*_{*n*} → *a*. It should be noted that this step is carried out concurrently on all reached service nodes. This is schematically illustrated in Fig. 4C.

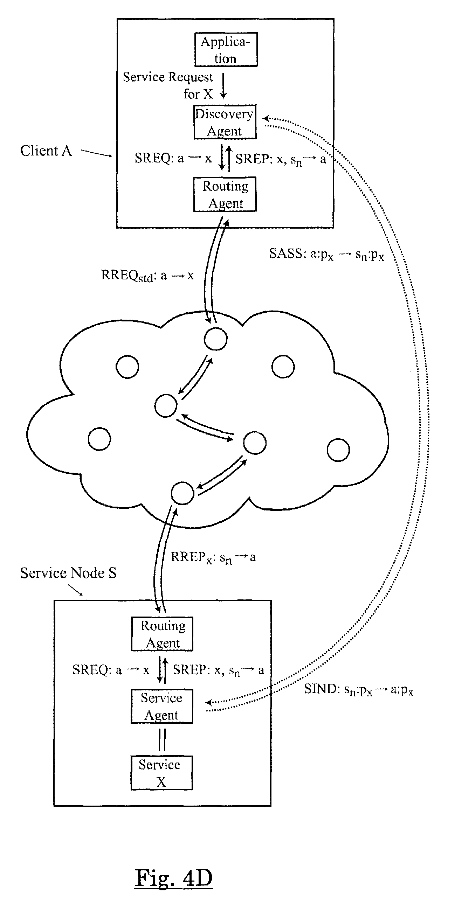

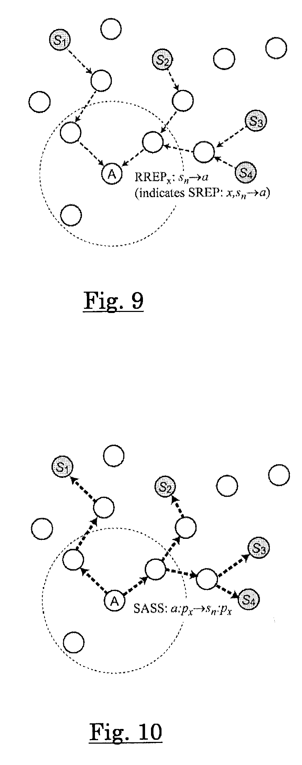

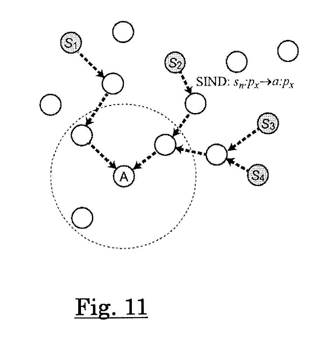

"Non-standard" here means that the message has some element which is not standardized, but the message is still protocol conform which means it is in accordance with the requirements of the AODV (or the DSR) protocol. Such a non-standard but protocol conform message can e.g. be generated using a (reserved) bit or element of the message for this special purpose, namely indicating that the RREP is a reply to a service request. In AODV this can e.g. be done by a flag in the reserved field of the RREPₓ: *s*_{*n*} → *a* to identify it for the routing protocol agent on *A* as a reply to a RREQ_{std}: *a* → *x*. In DSR this can be done by a special service discovery IP address as target in the RREPₓ: *s*_{*n*} → *a* to identify it as SREP: x, *s*_{*n*} → *a* for the routing protocol agent on *A*. The DSR protocol does not store the routing information in tables of the intermediate nodes but rather forwards the routing information cumulatively in the RREQ and RREP messages itself. Therefore the DSR protocol can easily be used by inserting an additional target address x which is then interpreted by node A when receiving the message as being directed to a service discovery agent running on node A. There may be provided a pool of such special service discovery addresses which are predefined and which are then interpreted by the receiving protocol agent as being directed to the service discovery agent which in turn recognizes the RREPₓ: *s*_{*n*} → *a* as actually being issued in response to a RREQ_{std}: *a* → x message.The procedure is resumed as in step 7 of the base procedure explained before, but it again differs in step 8 and 9 as follows.
8. If the RREPₓ: *s*_{*n*} → *a* with destination IP address x listed in the service discovery IP address set is received on client node *A*, The routing protocol agent on *A* records the request as usual by making corresponding entries in the routing table. Due to the indication contained in the RREPₓ: *s*_{*n*} → *a* which indicates that it is a reply to a RREQ_{std}: *a* → *x* message the routing agent can recognize that it should now indicate a SREP: x, *s*_{*n*} → *a* to the service discovery agent running on A. This is schematically illustrated in Fig. 9 and also in Fig. 4C. In case of AODV this is not sufficient to fully identify the service by the client node A. For that purpose there is provided in case of AODV a common service discovery agent for all services requests issued by A, which provides a common service port and identifies the discovered services by their additional SIND message. The situation is somewhat different in case of the DSR protocol due to the possibility to include special service discovery IP addresses in the reply. If there is made use of a pool of previously defined service discovery IP addresses one can assign a certain service discovery IP address to a certain service, and this makes it then unnecessary to send a further service indication message SIND because the protocol agent (or the service discovery agent) is already able to identify the service X based on the special service discovery IP address used in the RREPₓ: *s*_{*n*} → *a* message
   In both cases (AODV and DSR) the service discovery agent will finish the service association as follows, whereas in case of DSR this actually is optional.
9. To complete the service discovery, the service discovery agent on node A issues a service association message to identify the service receiving ability of service discovery agent (or the application process linked thereto) on client node A using the related service ports *a:p*_{*x*} and *s*_{*n*}*:p*_{*x*}. The service association message is send over the previous established forward route by the routing protocol as usual. This step is denoted by the term SASS: *a:p*_{*X*} → *s*_{*n*}*:p*_{*x*}. It is schematically illustrated by Fig. 10 and also in Fig. 4D.
10. When the service agent *X* on service node *S*_{*n*} receives the SASS: *a:p*_{*X*} *→ s*_{*n*}*:p*_{*x*}, it responds with an service indication message to the discovery agent for service *X* on client node A using the related service ports *s*_{*n*}*:p*_{*x*} and *a:p*_{*x*}. The service indication message is send over the previous established reverse route by the routing protocol as usual. This step is denoted by the term SIND: *s*_{*n*}*:p*_{*x*} *→ a:p*_{*x*}. This step is schematically illustrated by Fig. 11 and also in Fig. 4D.

The service discovery is finished as in step 10 and 11 of the base procedure. These two steps are transmission steps using the normal transmission protocol such as TCP/IP or UDP. The communication endpoints have been established already by the service discovery procedure, and then the service association message and the service indication message perform a final handshake finalizing the connection, possibly covering a first payload or establishing a security context.

While the base procedure allows fast information propagation from service nodes to client nodes for the purpose of service discovery, the service association procedures allows service and client nodes a pre-selection. This means that the client node is able to choose which service nodes it wishes to contact in order to obtain further information. In the previous embodiment this information was sent in any case by the service independent of whether the client actually wants to obtain it. This may e.g. be important, if SIND and SASS are based on a costly security context, e.g., a mandatory client authentication or service encryption which should be avoided for client-service pairs where the client actually does not want to make use of the service. Thus, in the service association procedure the SASS message can e.g. carry the client authentication before the service node answers with the encrypted SIND message. While the service discovery method described before is directed to detect as fast and as complete as possible the available service nodes, the final handshake is made once this information is available and the possibly costly (in terms of computation power and transmission bandwidth) establishment of the final handshake consisting of the SASS and SIND messages may then be carried out only for those communication partners between which - according to the circumstances - a client service connection is deemed suitable and should be established.

Using the methods according to the embodiments described hereinbefore a client node in an ad-hoc network may in a quick and efficient manner discover service nodes in its surrounding area, typically in close proximity to the client node. The term "close proximity" is intentionally chosen to be somewhat fuzzy. For the purposes described herein, it is unnecessary to find the closest or one of the closest service nodes according to a specific distance metric. However, the method presented according to the embodiments described before will in most cases establish communication with all service nodes within a certain distance when using hop count as metric. The proposed embodiments are suitable for finding all service nodes within a distance according to the given metric. The efficiency of the method can be raised by repeated execution of the method, as also described hereinbefore.

It will be readily apparent to the skilled person that the methods according to the embodiments described hereinbefore may be implemented in any ad-hoc network independent of the actual standard being used. Moreover, a skilled person will readily recognize that the nodes of the network may be any elements such as computers, PDAs, Laptop computers, mobile phones, smartphones, or the like, in short any kind of devices which may be able to connect to a network and act as a node. Accordingly, when reference is made to elements of such nodes such as modules of said nodes, it will be readily recognized that these modules may be implemented in hardware, in software, or as a combination of both. In particular it will be appreciated that the embodiments of the invention and the elements of modules described in connection therewith may be implemented by a computer program or computer programs running on a computer or being executed by a microprocessor, the computer or microprocessor implementing or being a part of the service node or the client node as described in connection with the foregoing embodiments. A skilled person will appreciate that the foregoing description enables the expert to suitably program computers or microprocessors fully or in part form network elements of an ad-hoc network to act in accordance with the procedures and mechanisms described in connection with the embodiments of the invention.

## Claims

1. A method for enabling the discovery of a service node in an ad-hoc network comprising a plurality of nodes one or more of which are service nodes which can offer a certain service to a requesting client, said method comprising:
generating a route request by client which is a node of said ad-hoc network and wants to discover a service node, said route request being generated such that its destination address is a predefined IP address which is a reserved address and therefore actually cannot be an address assigned to a node in the ad-hoc network;
disseminating the route request through the nodes of said ad-hoc network using a routing protocol of an ad-hoc network which treats the route request as a standard route request directed to said predefined IP address and tries to locate a node having said predefined IP address;
if said route request reaches a service node, interpreting said route request directed to said predefined IP address as being a request for discovering a service node; and returning a reply from said service node to said requesting client to inform said requesting client about the discovery of said service node.

2. The method of claim 1, wherein
said reply returned from said service node identifies itself by its content as being sent from a node having said predetermined IP address.

3. The method of claim 1 or 2, further comprising
using an address different from said predefined IP address as the address of said service node once the connection between said client node and said service node has been established.

4. The method of one of claims 1 to 3, wherein a repeated generation of a route request for a different predefined address is carried out in response to the receipt of a route reply generated by an intermediate node due to its knowledge of a route to a requested destination address.

5. The method of one of claims 1 to 4, wherein the routing protocol executed on said client and/or said service node are executed by unmodified standard routing agents.

6. The method of claim 1, wherein said reply returned from said service node identifies itself by its content as being sent from a node having an address different from said predetermined IP address.

7. The method of claim 6, wherein the issuing of a reply having as originating address said predefined IP address is treated as an error or an attack on said network triggering the switching to a different predefined IP address for issuing further route requests to discover service nodes.

8. The method according to one of claims 6 or 7, further comprising:
sending a service indication message from the service node to the client node using the routing path which has been established by said route request and its corresponding reply to indicate to the client the availability of the service.

9. The method of one of claims 1 to 8, further comprising:
setting a flag in said route request indicating that only the destination node not an intermediate node knowing a route to said destination node may generate a route reply.

10. The method of one of claims 1 to 9, further comprising:
repeating the generation of a route request for a different destination address chosen from a pool of predefined reserved address which are not assigned to nodes of said ad-hoc network.

11. The method of one of the preceding claims, further comprising:
returning a reply to said route request to said requesting node, whereas said reply contains an indication which enables said requesting node to identify said reply as a reply to a service discovery request..

12. The method of claim 11, wherein said indication is an element of the reply message assuming a certain predefined value different from its standard value thereby enabling said client node to recognize the reply as a non-standard reply to a route request but as a reply to a service request.

13. The method of claim 11, wherein said indication comprises a service discovery specific predefined IP address which is recognized by said client node to identify the reply as a reply issued in response to a service discovery request.

14. The method of claim 13, wherein said discovery specific predefined IP address is one of a set of discovery specific predefined IP addresses and is used by said client node to identify the service from which the reply was issued.

15. The method of one of claims 6 to 14, further comprising:
sending a service association message from said client to sad service on said service node, and
sending a service indication from said service to said client to establish a connection between said service and said client.

16. The method of one of the preceding claims, further comprising:
detecting the pollution of the route cache of intermediate nodes, and
in response to such a detection, switching to a different predefined reserved IP address from a pool of non-existing IP addresses and generating a new route request using said different IP address.

17. The method of claims 1 to 16, wherein the route request is generated by a service node in order to discover and establish connection with other service nodes.

18. A client for use in an ad-hoc network comprising a plurality of nodes one or more of which are service nodes which can offer a certain service to said requesting client, said client comprising:
a requesting module for generating a route request by said client which is a node of said ad-hoc network and wants to discover a service node, said route request being generated such that its destination address is a predefined IP address which is a reserved address and therefore actually cannot be an address assigned to a node in the ad-hoc network and for disseminating the route request through the nodes of said ad-hoc network using a routing protocol of an ad-hoc network which treats the route request as a standard route request directed to said predefined IP address and tries to locate a node having said predefined IP address; and
a receiving module for receiving a reply returned from said service node to said requesting client to inform said requesting client about the discovery of said service node.

19. The client node according to claim 18, said client node being adapted to carry out a method according to one of claims 1 to 17.

20. A service node for use in an ad-hoc network comprising a plurality of client nodes which may request a certain service from said service node, said service node comprising:
a receiving module for receiving a route request generated by one of said client nodes which is a node of said ad-hoc network and wants to discover a service node, said route request being generated such that its destination address is a predefined IP address which is a reserved address and therefore actually cannot be an address assigned to a node in the ad-hoc network, said request having been disseminated through the nodes of said ad-hoc network using a routing protocol of an ad-hoc network which treats the route request as a standard route request directed to said predefined IP address and tries to locate the node having said predefined IP address; and
an interpreting module for interpreting said route request directed to said predefined IP address if it reaches said service node as being a request for discovering a service node; and
a replying module for generating a reply to be returned from said service node to said requesting client to inform said requesting client about the discovery of said service node.

21. The service node according to claim 20, said service node being adapted to carry out a method according to one of claims 1 to 17.

22. A computer program comprising instructions enabling a computer to carry out a method according to one of claims 1 to 17.
